# EUROPEAN PATENT SPECIFICATION

(11) **EP 1 680 628 B1**
(45) Date of publication and mention of the grant of the patent: **07.10.2009**
(21) Application number: 03751546.7
(22) Date of filing: 14.10.2003
(51) Int. Cl.: F24F 7/08

(54) **VENTILATOR**
VENTILATOR
VENTILATEUR

(43) Date of publication of application: 19.07.2006
(73) Proprietor: LG Electronics, Inc., Seoul 150-010 (KR)
(72) Inventor: CHO, Min-Chul, 616-830 Busan (KR); LEE, Seonghwan, 641-091 Kyungsangnam-Do (KR); SHIN, Soo-Yeon Booyoung Apt., Gimhae-Shi 621-833 Kyungsangnam-Do (KR)
(74) Representative: Wunderlich, Rainer
(86) International application number: PCT/KR2003/002130
(87) International publication number: WO 2005/036068

(56) References cited:
- JP-A- 7 332 727
- JP-A- 63 207 943
- JP-A- 2003 074 936

## Description

### TECHNICAL FIELD

The present invention relates to a ventilator for ventilating an indoor space by externally discharging indoor air and internally sucking outdoor air.

### BACKGROUND ART

In general, the carbon dioxide content of air increases in a hermetically sealed space with the passage of time because of breathing of living objects, and has detrimental effects on breathing. Accordingly, a ventilator is used to exchange contaminated indoor air for fresh outdoor air especially in a narrow space where a number of people stay such as an office or vehicle.

The ventilator includes an air blower for forcibly blowing indoor air and outdoor air, and repeats a process of externally discharging contaminated indoor air and internally sucking fresh outdoor air.

However, when cooling and ventilating operations are performed indoors at the same time, cooled indoor air is exhausted and hot outdoor air is sucked. Thus, a temperature of indoor air is higher than a cooling temperature, to reduce cooling efficiency. In the case that heating and ventilating operations are simultaneously performed indoors, heated indoor air is exhausted and cooled outdoor air is sucked. As a result, the temperature of indoor air is lower than a heating temperature, to reduce heating efficiency.

Therefore, the ventilator further includes a heat exchanger for exchanging heat between indoor air and outdoor air.

JP 7 332 727 A discloses a heat exchanging ventilation device to permit maintenance works of a motor for an air sending unit. The air sending units are arranged near the side unit with a posture, wherein motors are faced to the sides of a casing defining an inserting and an extracting port for an air sending unit. An operator can access the motor from a maintenance space in order to affect maintenance works.

JP 2003 074936 A describes a heat exchanging ventilator, which comprises a passage for exhausting indoor air to outdoors and a passage for supplying outdoor air to indoors formed in a body casing. An exhaust fan is disposed in the exhaust passage and a supply fan is disposed in the supply passage. The heat exchanger is disposed at the intersection of the exhaust passage and the supply passage, wherein the exhaust fan and the supply fan are disposed on the downstream side of the heat exchanger.

JP 63 207943 A discloses a ventilator having a heat exchanger. The heat exchanger can be removed after taking off a cover. Inlets and outlets are respectively aligned, when viewed from the top of the casing.

In detail, according to Japanese Laid-Open Patent Application 11-287492 shown in Fig. 1, an outdoor air suction hole 4a for sucking outdoor air and an indoor air discharge hole 6b for discharging indoor air are formed on one surface of a rectangular casing 2, an outdoor air discharge hole 4b for discharging outdoor air and an indoor air suction hole 6a for sucking indoor air are formed on the other surface of the casing 2, a heat exchanger 8 for exchanging heat by forming passages for separately flowing indoor air and outdoor air is installed in the center of the casing 2 to cross the casing 2, and an air supply fan 10 and an air exhaust fan 20 are installed in both edges of the casing 2 to be positioned inside the outdoor air discharge hole 4b and the indoor air discharge hole 6b.

In addition, an air path for guiding outdoor air sucked from the outdoor air suction hole 4a to the heat exchanger 8 to be discharged to the outdoor air discharge hole 4b, and an air path for guiding indoor air sucked from the indoor air suction hole 6a to the heat exchanger 8 to be discharged to the indoor air discharge hole 6b are formed in the casing 2.

Here, the heat exchanger 8 is installed to be connected or disconnected through a checking hole 2a formed in the center of one surface of the casing 2.

On the other hand, as disclosed in Japanese Laid-Open Patent Application 09-137984 shown in Figs. 2 and 3, an outdoor air suction hole 34a for sucking outdoor air and an indoor air discharge hole 3 6b for discharging indoor air are formed on one surface of a rectangular casing 32, an outdoor air discharge hole 34b for discharging outdoor air and an indoor air suction hole 36a for sucking indoor air are formed on the other surface of the casing 32, a heat exchanger 38 for forming passages for separately flowing outdoor air and indoor air is installed in the center of the casing 32 to cross the casing 32, and an air supply fan 40 for sucking outdoor air and an air exhaust fan 45 for discharging indoor air are installed in the center of one surface of the casing 32 and the center of the other surface of the casing 32, respectively.

In addition, partitioning units 37a and 37b for guiding outdoor air sucked from the outdoor air suction hole 34a to the heat exchanger 38, or guiding indoor air sucked from the indoor air suction hole 36a to the heat exchanger 38 are installed in the casing 32, and ducts 39a and 39b for guiding outdoor air passing through the heat exchanger 38 to be discharged to the outdoor air discharge hole 34b, or guiding indoor air passing through the heat exchanger 38 to be discharged to the indoor air discharge hole 36b are installed in the casing 32, to form air paths for separately flowing outdoor air and indoor air.

The h eat exchanger 38 is installed in the casing 32 to be connected or disconnected through a checking hole 32a formed in the center of one surface of the casing 32. The edges of the heat exchanger 38 are slidably fixed into rails 35 formed in both ends of the partitioning units 37a and 37b and the top and bottom inside surfaces of the casing 32.

However, various components such as the heat exchanger, the air supply fan and the air exhaust fan are installed in the casing of the ventilator, which increases the weight and size of the ventilator. It is thus difficult for the operator to carry and install the ventilator on a wall or ceiling.

Moreover, the air supply fan, the air exhaust fan and the motors for driving the fans are installed in the casing of the ventilator where the heat exchanger has been installed. As a result, the casing must be disassembled to examine the air supply fan, the air exhaust fan and the motors, which complicates the examination and repair process of the inside components.

In addition, the motors for driving the air supply fan and the air exhaust fan are installed in the casing of the ventilator in which outdoor air or indoor air flows, and thus operated as flow resistances, thereby reducing air flow efficiency and heat exchange efficiency.

### DISCLOSURE OF THE INVENTION

An object of the present invention is to provide a ventilator which can be easily carried and installed by an operator.

Another object of the present invention is to provide a ventilator which allows an operator to easily examine and repair various inside components of a casing.

Yet another object of the present invention is to provide a ventilator which can improve air flow efficiency and heat exchange efficiency by reducing flow resistances by appropriately changing installation positions of motors for driving an air supply fan and an air exhaust fan.

In order to achieve the above-described objects of the invention, there is provided a ventilator including: a casing main body having an indoor air suction hole for sucking indoor air on its one side surface and an outdoor air suction hole for sucking outdoor air on its other side surface, a heat exchanger for exchanging heat by separately flowing indoor air and outdoor air through first and second passages being installed in the casing main body; an air supply blowing means being installed in one side of the indoor air suction hole of the casing main body to be connected or disconnected, and having an outdoor air discharge hole for discharging outdoor air, an air supply fan for blowing outdoor air being installed in the air supply blowing means; and an air exhaust blowing means being installed in one side of the outdoor air suction hole of the casing main body to be connected or disconnected, and having an indoor air discharge hole for discharging indoor air, an air exhaust fan for blowing indoor air being installed in the air exhaust blowing means.

According to one aspect of the invention, the air supply blowing means includes: an air supply blowing casing being installed on an opening unit formed on one side surface of the casing main body to be connected or disconnected, and having an outdoor air discharge hole for discharging outdoor air on its one side surface; an air supply fan rotatably installed in the air supply blowing casing; and a motor for driving the air supply fan.

Preferably, a sirocco fan for discharging outdoor air sucked in the axial direction to the radius direction is used as the air supply fan, the air supply fan is installed in the air supply blowing casing, and the motor is externally protruded from the air supply blowing casing.

Especially, the outdoor air discharge hole is formed in the vertical direction to one surface of the casing main body to which the air supply blowing casing is adhered, and thus ducts are firmly connected to the outdoor air discharge hole.

According to another aspect of the invention, a guide groove and a guide rail engaged with the guide groove a re formed between the air supply blowing casing and the casing main body, so that the air supply blowing means can be slidably connected to the casing main body or disconnected from the casing main body. In detail, the guide groove is formed on one side surface of the air supply blowing casing coupled to the casing main body, and the guide rail engaged with the guide groove is formed on the opening unit on one side surface of the casing main body.

According to yet a nother aspect of the invention, the air supply blowing means can be installed in the center of one side surface of the casing main body, so that outdoor air sucked from the outdoor air suction hole can evenly pass through the whole heat exchanger.

According to yet another aspect of the invention, the ventilator further includes an indoor air passage guide installed in the casing main body, for guiding indoor air sucked from the indoor air suction hole to the first passages of the heat exchanger. The air supply blowing means is installed in one side of one side surface of the casing main body separately from the indoor air suction hole at a predetermined interval to reduce flow resistances of the indoor air passage guide.

According to yet another aspect of the invention, the air exhaust blowing means includes: an air exhaust blowing casing being installed on an opening unit formed on the other side surface of the casing main body to be connected or disconnected, and having an indoor air discharge hole for discharging indoor air on its one side surface; an air exhaust fan installed in the air exhaust blowing casing; and a motor for driving the air exhaust fan.

Preferably, a sirocco fan for discharging outdoor air sucked in the axial direction to the radius direction is used as the air exhaust fan, the air exhaust fan is installed in the air exhaust blowing casing, and the motor is externally protruded from the air exhaust blowing casing.

Especially, the indoor air discharge hole is formed in the vertical direction to one surface of the casing main body to which the air exhaust blowing casing is adhered, and thus ducts are firmly connected to the indoor air discharge hole.

According to yet a nother a spect of the invention, a guide groove and a guide rail engaged with the guide groove are formed between the air exhaust blowing casing and the casing main body, so that the air exhaust blowing means can be slidably connected to the casing main body or disconnected from the casing main body. In detail, the guide groove is formed on one side surface of the air exhaust blowing casing coupled to the casing main body, and the guide rail engaged with the guide groove is formed on the opening unit on the other side surface of the casing main body.

According to yet another aspect of the invention, the air exhaust blowing means can be installed in the center of the other side surface of the casing main body, so that indoor air sucked from the indoor air suction hole can evenly pass through the whole heat exchanger.

According to yet another aspect of the invention, the ventilator further includes an outdoor air passage guide installed in the casing main body, for guiding outdoor air sucked from the outdoor air suction hole to the second passages of the heat exchanger. The air exhaust blowing means is installed in one side of the other side surface of the casing main body separately from the outdoor air suction hole at a p redetermined interval to reduce flow resistances of the outdoor a ir passage guide.

### BRIEF DESCRIPTION OF THE DRAWINGS

The present invention will become better understood with reference to the accompanying drawings which are given only by way of illustration and thus are not limitative of the present invention, wherein:

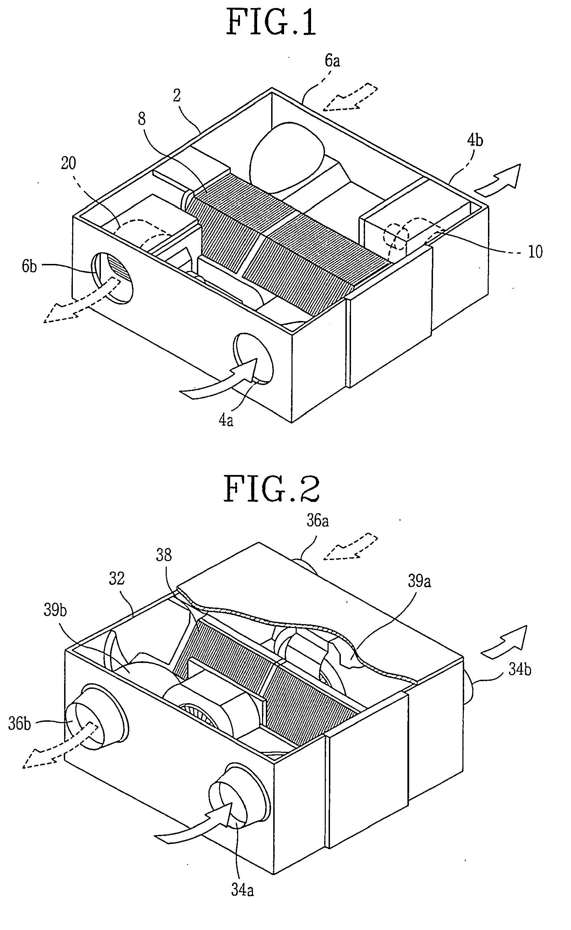

Fig. 1 is a perspective view illustrating one example of a conventional ventilator;
Fig. 2 is a perspective view illustrating another example of a conventional ventilator;

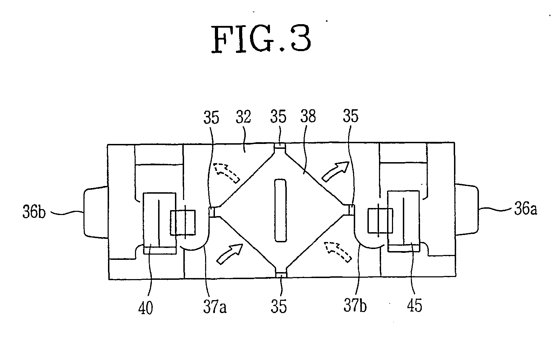

Fig. 3 is a cross-sectional view illustrating another example of the conventional ventilator;
Fig. 4 is a perspective view illustrating unit disassembly of a ventilator in accordance with the present invention;
Fig. 5 is a perspective view illustrating the ventilator in accordance with the present invention;
Fig. 6 is a plan view illustrating the ventilator in accordance with the present invention;
Fig. 7 is a cross-sectional view taken along line A-A of Fig. 6; and
Fig. 8 is a cross-sectional view taken along line B-B of Fig. 6.

### BEST MODE FOR CARRYING OUT THE INVENTION

Preferred embodiments of the present invention will now be described in detail with reference to the accompanying drawings.

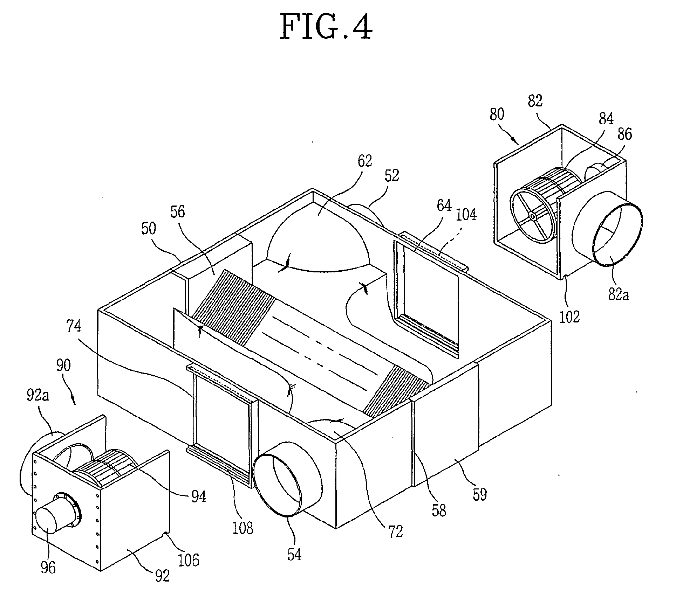

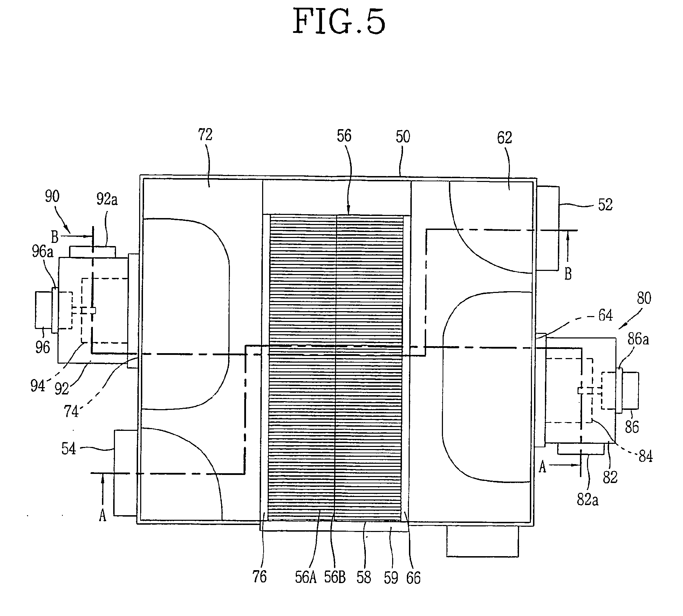

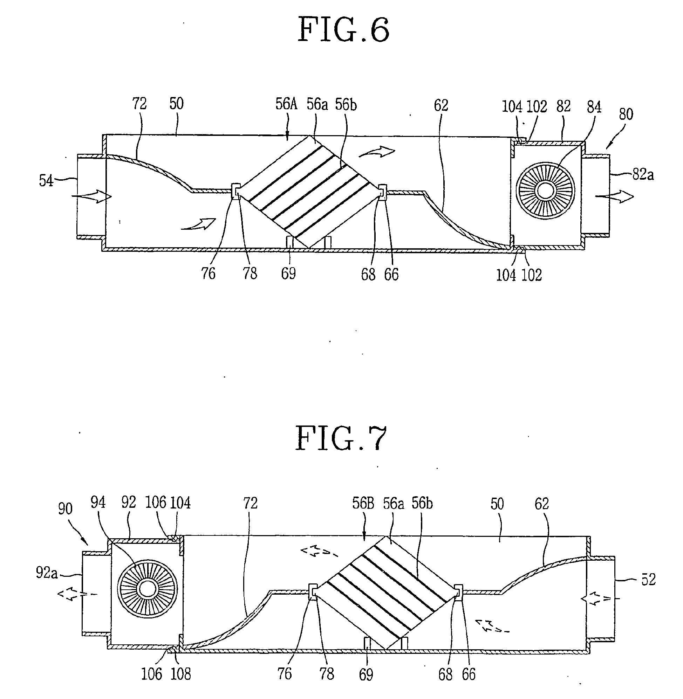

Fig. 4 is a perspective view illustrating unit disassembly of a ventilator in accordance with the present invention, Figs. 5 and 6 are a perspective view and a plan view illustrating the ventilator in accordance with the present invention, and Figs. 7 and 8 are cross-sectional views taken along lines A-A and B-B of Fig. 6.

Referring to Figs. 4 to 6, the ventilator includes a casing m ain body 5 0 having an indoor air suction hole 52 for sucking indoor air on its one side surface and an outdoor air suction hole 54 for sucking outdoor air on its other side surface, a heat exchanger 56 installed in the casing main body 50, for exchanging heat by separately flowing indoor air and outdoor air through first and second passages, an air supply blowing means 80 installed in one side of the indoor air suction hole 52 of the casing main body 50 to be connected or disconnected, for internally sucking outdoor air, and an air exhaust blowing means 90 installed in one side of the outdoor air suction hole 54 of the casing main body 50 to be connected or disconnected, for externally discharging indoor air.

Here, an indoor air passage guide 62 for guiding indoor air to the first passages of the heat exchanger 56 is installed in one side of the casing main body 50 where the indoor air suction hole 52 has been formed. The indoor air passage guide 62 is upwardly protruded near the indoor air suction hole 52 and downwardly protruded near the air supply blowing means 80. The first passages of the heat exchanger 56 are formed to discharge indoor air sucked to the bottom of one side surface of the heat exchanger 56 to the top of the other side surface of the heat exchanger 56.

In addition, an outdoor air passage guide 72 for guiding outdoor air to the second passages of the heat exchanger 56 is installed in one side of the casing main body 50 where the outdoor air suction hole 54 has been formed. The outdoor air passage guide 72 is upwardly protruded near the outdoor air suction hole 54 and downwardly protruded near the air exhaust blowing means 90. The second passages of the heat exchanger 56 are formed to discharge outdoor air sucked to the bottom of the other side surface of the heat exchanger 56 to the top of one side surface of the heat exchanger 56.

The heat exchanger 56 is installed by stacking first and second heat exchange units 56A and 56B for separately flowing indoor air and outdoor air. In the first and second heat exchange units 56A and 56B, a plurality of guide ribs 56b are installed on rectangular or hexagonal thin heat exchange films 56a. The first and second heat exchange units 56A and 56B form different passages for flowing air according to installation directions of the guide ribs 56b.

On the other hand, a checking hole 58 is formed on one side surface of the casing main body 50, and covered by a checking cover 59. Assembly grooves 66 and 76 are formed long in the ends of the indoor air passage guide 62 and the outdoor air passage guide 72, and assembly protrusions 68 and 78 are formed long in both ends of the heat exchanger 56 in the length direction, so that the heat exchanger 56 can be installed to be connected or disconnected through the checking hole 58. Assembly grooves 69 are formed long on the top and bottom inside surfaces of the casing main body 50, so that the top end bottom ends of the heat exchanger 56 can be positioned thereon.

In the casing main body 50, a first opening unit 64 is formed in one side of the indoor air suction hole 52, the air supply blowing means 80 is removably installed on the circumference of the first opening unit 64 to be linked to the first opening unit 64, a second opening unit 74 is formed in one side of the outdoor air suction hole 54, and the air exhaust blowing means 90 is removably installed on the circumference of the second opening unit 74 to be linked to the second opening unit 74.

Here, the indoor air suction hole 52 is formed in one side of one surface of the casing main body 50, the outdoor air suction hole 54 is formed in the other side of the facing surface (the other surface) to the surface of the casing main body 50 where the indoor air suction hole 52 has been formed, and the first and second opening units 64 and 74 on which the air supply blowing means 80 and the air exhaust blowing means 90 are installed are formed in the centers of one and the other surfaces of the casing main body 50, so that indoor air or outdoor air can evenly pass through the whole heat exchanger 56.

In addition, the first opening unit 64 on which the air supply blowing means 80 is installed can be formed in the other side of one surface of the casing main body 50 separately from the indoor air suction hole 52 at a predetermined interval to reduce flow resistances of outdoor air due to the protruded parts of the indoor air passage guide 62, and the second opening unit 74 on which the air exhaust blowing means 90 is installed can be formed in one side of the other surface of the casing main body 50 separately from the outdoor air suction hole 54 at a predetermined interval to reduce flow resistances of indoor air due to the protruded parts of the outdoor air passage guide 72.

Especially, the air supply blowing means 80 includes an air supply blowing casing 82 being installed on the circumference of the first opening unit 64 to be linked to the first opening unit 64, and having an outdoor air discharge hole 82a for discharging outdoor air in its one side, an air supply fan 84 rotatably installed in the air supply blowing casing 82, for sucking outdoor air from the first opening unit 64 and discharging sucked air to the outdoor air discharge hole 82a, and a motor 86 for rotatably driving the air supply fan 84.

One surface of the air supply blowing casing 82 installed on the circumference of the first opening unit 64 is opened, and the outdoor air discharge hole 82a is formed on one of the other surfaces and connected to ducts (not shown) linked to the indoor side.

Here, a sirocco fan which discharges outdoor air sucked in the axial direction to the radius direction and shows relatively high air flow is used as the air supply fan 84. The outdoor air discharge hole 82a is formed on the air supply blowing casing 82 in the vertical direction to one surface of the casing main body 50 where the first opening unit 64 has been formed, so that outdoor air can be sucked in the axial direction and discharged in the radius direction.

The motor 86 is coupled in the axial direction of the air supply fan 84. When the motor 86 is operated, the air supply fan 84 is operated to suck outdoor air in the axial direction. Accordingly, the motor 86 becomes a suction flow resistance of outdoor air. In order to reduce the suction flow resistance of outdoor air by the motor 86, the rear end of the motor 86 is positioned outside the air supply blowing casing 82.

A motor fixing end 86a formed on the circumference of the motor 86 is fixed to the air supply blowing casing 82 by using screws or other motor supporting members.

A guide groove 102 and a guide rail 104 engaged with the guide groove 102 are formed between the air supply blowing casing 82 and the casing main body 50, so that the air supply blowing means 80 can be slidably connected to the casing main body 50 or disconnected from the casing main body 50. The guide groove 102 is formed on one side surface of the air supply blowing casing 82 coupled to the first opening unit 64, and the guide rail 104 is formed on the first opening unit 64 to be engaged with the guide groove 102.

The guide groove 102 and the guide rail 104 are formed to slidably couple the air supply blowing means 80 to the casing main body 50 in the opposite direction to the indoor air suction hole 52.

When the air supply blowing means 80 is completely coupled to the first opening unit 64 of the casing main body 50, the rear ends of the guide groove 102 and the guide rail 104 are preferably blocked to prevent the air supply blowing means 80 from moving.

Identically to the air supply blowing means 80, the air exhaust blowing means 90 includes an air exhaust blowing casing 92 being installed on the circumference of the second opening unit 74 to be linked to the second opening unit 74, and having an indoor air discharge hole 92a for discharging indoor air in its one side, an air exhaust fan 94 rotatably installed in the air exhaust blowing casing 92, for sucking indoor air from the second opening unit 74 and discharging sucked air to the indoor air discharge hole 92a, and a motor 96 for rotatably driving the air exhaust fan 94.

One surface of the air exhaust blowing casing 92 installed on the circumference of the second opening unit 74 is opened, and the indoor air discharge hole 92a is formed on one of the other surfaces and connected to ducts (not shown) linked to the outdoor side.

Identically to the air supply fan 84, a sirocco fan which discharges outdoor air sucked in the axial direction to the radius direction and shows relatively high air flow is used as the air exhaust fan 94. The indoor air discharge hole 92a is formed on the air exhaust blowing casing 92 in the vertical direction to one surface of the casing main body 50 where the second opening unit 74 has been formed, so that outdoor air can be sucked in the axial direction and discharged in the radius direction.

The motor 96 is coupled in the axial direction of the air exhaust fan 94. When the motor 96 is operated, the air exhaust fan 96 is operated to suck indoor air in the axial direction. Accordingly, the motor 96 becomes a suction flow resistance of indoor air. In order to reduce the suction flow resistance of indoor air by the motor 96, the rear end of the motor 96 is positioned outside the air exhaust blowing casing 92.

A motor fixing end 96a formed on the circumference of the motor 96 is fixed to the air exhaust blowing casing 92 by using screws or other motor supporting members.

A guide groove 106 and a guide rail 108 engaged with the guide groove 106 are formed between the air exhaust blowing casing 92 and the casing main body 50, so that the air exhaust blowing means 90 can be slidably connected to the casing main body 50 or disconnected from the casing main body 50. The guide groove 106 is formed on one side surface of the air exhaust blowing casing 92 coupled to the second opening unit 74, and the guide rail 108 is formed on the second opening unit 74 to be engaged with the guide groove 106.

The guide groove 106 and the guide rail 108 are formed to slidably couple the air exhaust blowing means 90 to the casing main body 50 in the opposite direction to the outdoor air suction hole 52.

When the air exhaust blowing means 90 is completely coupled to the second opening unit 74 of the casing main body 50, the rear ends of the guide groove 106 and the guide rail 108 are preferably blocked to prevent the air exhaust blowing means 90 from moving.

In the ventilator of the present invention, the air supply blowing means 80 including the air supply fan 84 and the air exhaust blowing means 90 including the air exhaust fan 94 are removably installed in both ends of the casing main body 50 including the heat exchanger 56. Therefore, the operator can selectively carry and install the casing main body 50, the air supply blowing means 80 and the air exhaust blowing means 90, and thus easily carry and install them.

In addition, the heat exchanger 56 is slidably connected or disconnected through the checking hole 58 of the casing main body 50, and the air supply blowing casing 82 and the air exhaust blowing casing 92 are connected to the casing main body 50 or disconnected from the casing main body 50. Accordingly, the operator can separate the casing including the inside components such as the heat exchanger 56, the air supply fan 84, the air exhaust fan 94 and the motors 86 and 96, and easily examine and repair them.

Furthermore, the motors 86 and 96 for driving the air supply fan 84 and the air exhaust fan 94 are externally protruded from the air supply blowing casing 82 and the air exhaust blowing casing 92. As a result, flow resistances of air sucked in the axial direction are reduced to improve air flow efficiency, thereby increasing heat exchange efficiency.

Although the preferred embodiments of the present invention have been described, it is understood that the present invention should not be limited to these preferred embodiments but various changes and modifications can be made by one skilled in the art within the scope of the present invention as hereinafter claimed.

## Claims

1. A ventilator, comprising:
a casing main body (50) having an indoor air suction hole (52) for sucking indoor air on its one side surface and an outdoor air suction hole (54) for sucking outdoor air on its other side surface, a heat exchanger (56) for exchanging heat by separately flowing indoor air and outdoor air through first and second passages being installed in the casing main body (50);
an air supply blowing means (80) being installed in one side of the indoor air suction hole (52) of the casing main body (50) and having an outdoor air discharge hole (82a) for discharging outdoor air; and
an air exhaust blowing means (90) being installed in one side of the outdoor air suction hole (54) of the casing main body (50) and having an indoor air discharge hole (92a) for discharging indoor air,
**characterized in that**
the air supplying blowing means (80) inside which an air supplying fan (84) for blowing outdoor air is installed is removably installed outside of the casing main body (50),
and the air exhaust blowing means (90) inside which an air exhausting fan (94) for blowing indoor air is installed is removably installed outside the casing main body (50).

2. The ventilator of claim 1, wherein the air supply blowing means (80) comprises:
an air supply blowing casing (82) being installed on an opening unit formed on one side surface of the casing main body (50) to be connected or disconnected, and having an outdoor air discharge hole (82a) for discharging outdoor air on its one side surface;
an air supply fan (84) rotatably installed in the air supply blowing casing (82); and
a motor (86) for driving the air supply fan (84).

3. The ventilator of claim 2, wherein the air supply fan (84) is a sirocco fan for discharging outdoor air sucked in the axial direction to the radius direction.

4. The ventilator of claim 3, wherein the air supply fan (84) is installed in the air supply blowing casing (82), and the motor (86) is externally protruded from the air supply blowing casing (82).

5. The ventilator of claim 3, wherein the outdoor air discharge hole (82a) is formed in the vertical direction to one surface of the casing main body (50) to which the air supply blowing casing (82) is adhered.

6. The ventilator of claim 5, wherein a guide groove (102) and a guide rail (104) engaged with the guide groove (102) are formed between the air supply blowing casing (82) and the casing main body (50), so that the air supply blowing means (82) can be slidably connected to the casing main body (50) or disconnected from the casing main body (50).

7. The ventilator of claim 6, wherein the guide groove (102) is formed on one side surface of the air supply blowing casing (82) coupled to the casing main body (50), and the guide rail (104) engaged with the guide groove (102) is formed on the opening unit on one side surface of the casing main body (50).

8. The ventilator of claim 2, wherein the air supply blowing means (80) is installed in the center of one side surface of the casing main body (50), so that outdoor air sucked from the outdoor air suction hole (54) can evenly pass through the whole heat exchanger (56).

9. The ventilator of claim 2, further comprising an indoor air passage guide (62) installed in the casing main body (50), for guiding indoor air sucked from the indoor air suction hole (52) to the first passages of the heat exchanger (56).

10. The ventilator of claim 9 wherein the air supply blowing means (80) is installed in one side of one side surface of the casing main body (50) separately from the indoor air suction hole (52) at a predetermined interval to reduce flow resistances of the indoor air passage guide (62).

11. The ventilator of claim 1, wherein the air exhaust blowing means (90) comprises:
an air exhaust blowing casing (92) being installed on an opening unit formed on the other side surface of the casing main body (50) to be connected or disconnected, and having an indoor air discharge hole (92a) for discharging indoor air on its one side surface;
an air exhaust fan (94) installed in the air exhaust blowing casing (92); and
a motor (96) for driving the air exhaust fan (94).

12. The ventilator of claim 11, wherein the air exhaust fan (94) is a sirocco fan for discharging outdoor air sucked in the axial direction to the radius direction.

13. The ventilator of claim 12, wherein the air exhaust fan (94) is installed in the air exhaust blowing casing (92), and the motor (96) is externally protruded from the air exhaust blowing casing (92).

14. The ventilator of claim 13, wherein the indoor air discharge hole (92a) is formed in the vertical direction to one surface of the casing main body (50) to which the air exhaust blowing casing (92) is adhered.

15. The ventilator of claim 14, wherein a guide groove (102) and a guide rail (104) engaged with the guide groove (102) are formed between the air exhaust blowing casing (92) and the casing main body (50), so that the air exhaust blowing means (90) can be slidably connected to the casing main body (50) or disconnected from the casing main body (50).

16. The ventilator of claim 15, wherein the guide groove (102) is formed on one side surface of the air exhaust blowing casing (92) coupled to the casing main body (50), and the guide rail (104) engaged with the guide groove (102) is formed on the opening unit on the other side surface of the casing main body (50).

17. The ventilator of claim 11, wherein the air exhaust blowing means (90) is installed in the center of the other side surface of the casing main body (50), so that indoor air sucked from the indoor air suction hole (52) can evenly pass through the whole heat exchanger (56).

18. The ventilator of claim 11, further comprising an outdoor air passage guide (72) installed in the casing main body (50), for guiding outdoor air sucked from the outdoor air suction hole (54) to the second passages of the heat exchanger (56).

19. The ventilator of claim 18, wherein the air exhaust blowing means (90) is installed in one side of the other side surface of the casing main body (50) separately from the outdoor air suction hole (54) at a predetermined interval to reduce flow resistances of the outdoor air passage guide (72).

## Patentansprüche

1. Ventilator, mit:
einem Gehäusehauptkörper (50) mit einem Innenluftansaugloch (52) zum Ansaugen von Innenluft auf dessen einer Seitenoberfläche und einem Außenluftansaugloch (54) zum Ansaugen von Außenluft auf dessen anderer Seitenoberfläche, einem Wärmetauscher (56) zum Austauschen von Wärme durch getrenntes Strömen von Innenluft und Außenluft durch erste und zweite Durchgänge, die in den Gehäusehauptkörper (50) eingebaut sind;
einem Luftzufuhrgebläsemittel (80), das in einer Seite des lnnenluftansaugloches (52) des Gehäusehauptkörpers (50) eingebaut ist, und ein Außenluftauslassloch (82a) zum Austragen von Außenluft aufweist; und
einem Luftausstoßgebläsemittel (90), das in einer Seite des Außenluftansaugloches (54) des Gehäusehauptkörpers (50) eingebaut ist und ein Innenluftaustragsloch (92a) zum Austragen von Innenluft aufweist,
**dadurch gekennzeichnet,**
**dass** das Luftzufuhrgebläsemittel (80), in dem ein Luftzufuhrventilator (84) zum Einblasen von Außenluft eingebaut ist, außerhalb des Gehäusehauptkörpers (50) entfernbar eingebaut ist; und
das Luftausstoßgebläsemittel (90), in dem ein Luftausblasventilator (94) zum Ausblasen von Innenluft eingebaut ist, außerhalb des Gehäusehauptkörpers (50) entfernbar eingebaut ist.

2. Ventilator nach Anspruch 1, wobei das Luftzufuhrgebläsemittel (80) aufweist:
ein Luftzufuhrgebläsegehäuse (82), das auf einer Offnungseinheit eingebaut ist, die auf einer Seitenoberfläche des Gehäusehauptkörpers (50) ausgebildet ist, um verbunden oder getrennt zu werden, und das ein Außenluftauslassloch (82a) zum Austragen von Außenluft auf dessen einer Seitenoberfläche aufweist;
einen Luftzufuhrventilator (84), der drehbar in dem Luftzufuhrgebläsegehäuse (82) eingebaut ist; und
einen Motor (86) zum Antreiben des Luftzufuhrventilators (84).

3. Ventilator nach Anspruch 2, wobei der Luftzufuhrventilator (84) ein Schirokkoventilator ist, um in der axialen Richtung eingesogene Außenluft zu der radialen Richtung auszutragen.

4. Ventilator nach Anspruch 3, wobei der Luftzufuhrventilator (84) in dem Luftzufuhrgebläsegehäuse (82) eingebaut ist, und der Motor (86) von dem Luftzufuhrgebläsegehäuse (82) nach außen vorsteht.

5. Ventilator nach Anspruch 3, wobei das Außenluftauslassloch (82a) in der vertikalen Richtung zu einer Oberfläche des Gehäusehauptkörpers (50) ausgebildet ist, an dem das Luftzufuhrgebläsegehäuse (82) angeklebt ist.

6. Ventilator nach Anspruch 5, wobei eine Führungsrille (102) und eine Führungsschiene (104), die in die Führungsrille (102) eingreift, zwischen dem Luftzufuhrgebläsegehäuse (82) und dem Gehäusehauptkörper (50) ausgebildet sind, so dass das Luftzufuhrgebläsemittel (80) gleitend mit dem Gehäusehauptkörper (50) verbunden oder von dem Gehäusehauptkörper (50) getrennt werden kann.

7. Ventilator nach Anspruch 6, wobei die Führungsrille (102) auf einer Seitenoberfläche des Luftzufuhrgebläsegehäuse (82), das mit dem Gehäusehauptkörper (50) verbunden ist, ausgebildet ist, und die Führungsschiene (104), die mit der Führungsrille (102) in Eingriff steht, auf der Öffnungseinheit auf einer Seitenoberfläche des Gehäusehauptkörpers (50) ausgebildet ist.

8. Ventilator nach Anspruch 2, wobei das Luftzufuhrgebläsemittel (80) im Zentrum einer Seitenoberfläche des Gehäusehauptkörpers (50) eingebaut ist, so dass von dem Außenluftansaugloch (54) eingesogene Außenluft gleichmäßig durch den gesamten Wärmetauscher (56) hindurchtreten kann.

9. Ventilator nach Anspruch 2, ferner mit einer Innenluftdurchgangsführung (62), die in den Gehäusehauptkörper (50) eingebaut ist, um von dem Innenluftansaugloch (52) eingesogene Innenluft zu den ersten Durchgängen des Wärmetauschers (56) zu leiten.

10. Ventilator nach Anspruch 9, wobei das Luftzufuhrgebläsemittel (80) in einer Seitenoberfläche des Gehäusehauptkörpers (50) getrennt von dem Innenluftansaugloch (52) in einem vorbestimmten Abstand eingebaut ist, um Strömungswiderstände der Innenluftdurchgangsführung (62) zu verringern.

11. Ventilator nach Anspruch 1, wobei das Luftausstoßgebläsemittel (90) aufweist:
ein Luftausstoßgebläsegehäuse (92), das auf einer Öffnungseinheit, die auf der anderen Seitenoberfläche des Gehäusehauptkörpers (50) ausgebildet ist, eingebaut ist, um verbunden oder getrennt zu werden, und ein Innenluftaustragsloch (92a) aufweist, um Innenluft auf dessen einer Seitenoberfläche auszutragen;
einen Luftausstoßventilator (94), der in dem Luftausstoßgebläsegehäuse (92) eingebaut ist; und
einen Motor (96) zum Antreiben des Luftausstoßventilators (94).

12. Ventilator nach Anspruch 11, wobei der Luftausstoßventilator (94) ein Schirokkoventilator ist, um in der axialen Richtung eingesogene Außenluft zu der radialen Richtung auszutragen.

13. Ventilator nach Anspruch 12, wobei der Luftausstoßventilator (94) in dem Luftausstoßgebläsegehäuse (92) eingebaut ist, und der Motor (96) von dem Luftausstoßgebläsegehäuse (92) nach außen vorsteht.

14. Ventilator nach Anspruch 13, wobei das Innenluftaustragsloch (92a) in der vertikalen Richtung zu einer Oberfläche des Gehäusehauptkörpers (50), an dem das Luftausstoßgebläsegehäuse (92) angeklebt ist, ausgebildet ist.

15. Ventilator nach Anspruch 14, wobei eine Führungsrille (102)
und eine Führungsschiene (104), die mit der Führungsrille (102) in Eingriff steht, zwischen dem Luftausstoßgebläsegehäuse (92) und dem Gehäusehauptkörper (50) ausgebildet sind, so dass das Luftausstoßgebläsegehäuse (92) gleitend mit dem Gehäusehauptkörper (50) verbunden oder von dem Gehäusehauptkörper (50) entfernt werden kann.

16. Ventilator nach Anspruch 15, wobei die Führungsrille (102) auf einer Seitenoberfläche des Luftausstoßgebläsegehäuses (92), das mit dem Gehäusehauptkörper (50) verbunden ist, ausgebildet ist, und die Führungsschiene (104), die mit der Führungsrille (102) in Eingriff steht, auf der Offnungseinheit auf der anderen Seitenoberfläche des Gehäusehauptkörpers (50) ausgebildet ist.

17. Ventilator nach Anspruch 11, wobei das Luftausstoßgebläsemittel (90) in dem Zentrum der anderen Seitenoberfläche des Gehäusehauptkörpers (50) eingebaut ist, so dass von dem Innenluftansaugloch (52) eingesogene Innenluft gleichmäßig durch den gesamten Wärmetauscher (56) hindurchtreten kann.

18. Ventilator nach Anspruch 11, ferner mit einer Außenluftdurchgangsführung (72), die in den Gehäusehauptkörper (50) eingebaut ist, zum Leiten von von dem Außenluftansaugloch (54) angesogener Außenluft zu den zweiten Durchgängen des Wärmetauschers (56).

19. Ventilator nach Anspruch 18, wobei das Luftausstoßgebläsemittel (90) in einer Seite der anderen Seitenoberfläche des Gehäusehauptkörpers (50) getrennt von dem Außenluftansaugloch (54) in einem vorbestimmten Abstand eingebaut ist, um Strömungswiderstände der Außenluftdurchgangsführung (72) zu verringern.

## Revendications

1. Ventilateur comprenant :
un corps principal (50) formant boîtier possédant un trou (52) d'aspiration d'air intérieur pour aspirer de l'air intérieur, situé sur sa première surface latérale, et un trou (54) d'aspiration d'air extérieur pour aspirer de l'air extérieur, situé sur son autre surface latérale, un échangeur de chaleur (56), destiné à échanger de la chaleur par un écoulement séparé de l'air intérieur et de l'air extérieur à travers des premiers et des deuxièmes passages, étant installé dans le corps principal (50) formant boîtier ;
des moyens soufflants (80) d'alimentation en air étant installés sur un côté du trou (52) d'aspiration d'air intérieur du corps principal (50) formant boîtier, et ayant un trou (82a) de refoulement d'air extérieur pour refouler de l'air extérieur ; et
des moyens soufflants (90) d'évacuation d'air étant installés sur un côté du trou (54) d'aspiration d'air extérieur du corps principal (50) formant boîtier, et ayant un trou (92a) de refoulement d'air intérieur pour refouler de l'air intérieur,
***caractérisé en ce que***
les moyens soufflants (80) d'alimentation en air, à l'intérieur desquels un ventilateur (84) d'alimentation en air pour souffler de l'air extérieur est installé, sont installés de manière amovible à l'extérieur du corps principal (50) formant boîtier,
et les moyens soufflants (90) d'évacuation d'air, à l'intérieur desquels un ventilateur (94) d'évacuation d'air pour souffler de l'air intérieur est installé, sont installés de manière amovible à l'extérieur du corps principal (50) formant boîtier.

2. Ventilateur selon la revendication 1, dans lequel les moyens soufflants (80) d'alimentation en air comprennent :
un boîtier soufflant (82) d'alimentation en air qui est installé sur une unité de bouche formée sur une surface latérale du corps principal (50) formant boîtier pour être connecté ou disconnecté, et ayant un trou (82a) de refoulement d'air extérieur pour refouler de l'air extérieur sur sa dite surface latérale ;
un ventilateur (84) d'alimentation en air installé de manière rotative dans le boîtier soufflant (82) d'alimentation en air ; et
un moteur (86) pour entraîner le ventilateur (84) d'alimentation en air.

3. Ventilateur selon la revendication 2, dans lequel le ventilateur (84) d'alimentation en air est un ventilateur "sirocco" pour évacuer dans la direction radiale de l'air extérieur aspiré dans la direction axiale.

4. Ventilateur selon la revendication 3, dans lequel le ventilateur (84) d'alimentation en air est installé dans le boîtier soufflant (82) d'alimentation en air, et le moteur (86) fait saillie extérieurement du boîtier soufflant (82) d'alimentation en air.

5. Ventilateur selon la revendication 3, dans lequel le trou (82a) de refoulement d'air extérieur est formé dans la direction verticale, vers une surface du corps principal (50) formant boîtier à laquelle le boîtier soufflant (82) d'alimentation en air est fixé.

6. Ventilateur selon la revendication 5, dans lequel une rainure de guidage (102) et un rail de guidage (104) engagé avec la rainure de guidage (102) sont formés entre le boîtier soufflant (82) d'alimentation en air et le corps principal (50) formant boîtier, de telle sorte que les moyens soufflants (80) d'alimentation en air puissent, par coulissement, être raccordés au corps principal (50) formant boîtier ou déconnectés du corps principal (50) du boîtier.

7. Ventilateur selon la revendication 6, dans lequel la rainure de guidage (102) est formée sur une surface latérale du boîtier soufflant (82) d'alimentation en air couplée au corps principal (50) formant boîtier, et le rail de guidage (104) engagé avec la rainure de guidage (102) est formé sur l'unité de bouche sur une surface latérale du corps principal (50) formant boîtier.

8. Ventilateur selon la revendication 2, dans lequel les moyens soufflants (80) d'alimentation en air sont installés au centre d'une surface latérale du corps principal (50) formant boîtier, de telle sorte que de l'air extérieur aspiré depuis le trou (54) d'aspiration d'air extérieur puisse passer de manière égale à travers la totalité de l'échangeur de chaleur (56).

9. Ventilateur selon la revendication 2, comprenant en outre un guide (62) de passage d'air intérieur installé dans le corps principal (50) formant boîtier, pour guider de l'air intérieur aspiré du trou (52) d'aspiration d'air intérieur jusqu'aux premiers passages de l'échangeur de chaleur (56).

10. Ventilateur selon la revendication 9, dans lequel les moyens soufflants (80) d'alimentation en air sont installés sur un côté d'une surface latérale du corps principal (50) formant boîtier, séparément du trou (52) d'aspiration d'air intérieur, selon un intervalle prédéterminé de manière à réduire les résistances d'écoulement du guide (62) de passage d'air intérieur.

11. Ventilateur selon la revendication 1, dans lequel les moyens soufflants (90) d'évacuation d'air comprennent :
un boîtier soufflant (92) d'évacuation d'air installé sur une unité de bouche formée sur l'autre surface latérale du corps principal (50) formant boîtier pour être raccordé ou déconnecté, et ayant, sur sa première surface latérale, un trou (92a) de refoulement d'air intérieur pour refouler de l'air intérieur ;
un ventilateur (94) d'évacuation d'air installé dans le boîtier soufflant (92) d'évacuation d'air ; et
un moteur (96) pour entraîner le ventilateur (94) d'évacuation d'air.

12. Ventilateur selon la revendication 11, dans lequel le ventilateur (94) d'évacuation d'air est un ventilateur "sirocco" pour évacuer dans la direction radiale de l'air extérieur aspiré dans la direction axiale.

13. Ventilateur selon la revendication 12, dans lequel le ventilateur (94) d'évacuation d'air est installé dans le boîtier soufflant (92) d'évacuation d'air, et le moteur (96) fait saillie extérieurement du boîtier soufflant (92) d'évacuation d'air.

14. Ventilateur selon la revendication 13, dans lequel le trou (92a) de refoulement d'air intérieur est formé dans la direction verticale, vers une surface du corps principal (50) formant boîtier à laquelle le boîtier soufflant (92) d'évacuation d'air est fixé.

15. Ventilateur selon la revendication 14, dans lequel une rainure de guidage (102) et un rail de guidage (104) engagé avec la rainure de guidage (102) sont formés entre le boîtier soufflant (92) d'évacuation d'air et le corps principal (50) formant boîtier, de telle sorte que les moyens soufflants (90) d'évacuation d'air puissent, par coulissement, être raccordés au corps principal (50) formant boîtier ou déconnectés du corps principal (50) formant boîtier.

16. Ventilateur selon la revendication 15, dans lequel la rainure de guidage (102) est formée sur une surface latérale du boîtier soufflant (92) d'évacuation d'air couplée au corps principal (50) formant boîtier, et le rail de guidage (104) engagé avec la rainure de guidage (102) est formé sur l'unité de bouche sur l'autre surface latérale du corps principal (50) formant boîtier.

17. Ventilateur selon la revendication 11, dans lequel les moyens soufflants (90) d'évacuation d'air sont installés au centre de l'autre surface latérale du corps principal (50) formant boîtier, de telle sorte que de l'air intérieur aspiré du trou (52) d'aspiration d'air intérieur puisse passer de manière égale à travers la totalité de l'échangeur de chaleur (56).

18. Ventilateur selon la revendication 11, comprenant de plus un guide (72) de passage d'air extérieur installé dans le corps principal (50) formant boîtier, pour guider de l'air extérieur aspiré depuis le trou (54) d'aspiration d'air extérieur vers les deuxièmes passages de l'échangeur de chaleur (56).

19. Ventilateur selon la revendication 18, dans lequel les moyens soufflants (90) d'évacuation d'air sont installés sur une face de l'autre surface latérale du corps principal (50) formant boîtier séparément du trou (54) d'aspiration d'air extérieur, selon un intervalle prédéterminé de manière à réduire les résistances d'écoulement du guide (72) de passage d'air extérieur.
